# EUROPÄISCHE PATENTSCHRIFT

(11) **EP 3 417 688 B1**
(45) Veröffentlichungstag und Bekanntmachung des Hinweises auf die Patenterteilung: **18.03.2020**
(21) Anmeldenummer: 18401047.8
(22) Anmeldetag: 17.05.2018
(51) Int. Cl.: A01C 7/08

(54) **LANDWIRTSCHAFTLICHE PNEUMATISCHE VERTEILMASCHINE**
AGRICULTURAL PNEUMATIC DISTRIBUTOR
MACHINE D'ÉPANDAGE PNEUMATIQUE AGRICOLE

(30) Priorität: 20.06.2017 DE 102017113487
(43) Veröffentlichungstag der Anmeldung: 26.12.2018
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Flucke, Jan, 27798 Hude (DE); Ahrens, Jan Bodo, 21522 Hohnstorf/ Elbe (DE)

(56) Entgegenhaltungen:
- EP-B1- 0 799 560
- WO-A1-2017/055266

## Beschreibung

Die Erfindung betrifft eine landwirtschaftliche pneumatische Verteilmaschine nach dem Oberbegriff des Patentanspruchs 1.

Beim Ausbringen von Saatgut und/oder Dünger besteht an Feldkeilen oder im Bereich des Vorgewendes regelmäßig die Notwendigkeit, die Verteilcharakteristik der eingesetzten landwirtschaftlichen pneumatischen Verteilmaschine anzupassen, damit Säfenster und Überlappungen effektiv vermieden werden können.
Die Anpassung der Verteilcharakteristik erfolgt beispielsweise durch eine Segment- oder Einzelreihenabschaltung, bei welcher einzelnen Ausbringelementen temporär kein Saatgut und/oder Dünger zugeführt wird. Die Ausbringelemente können dabei beispielsweise als Säschare oder Düngerschare ausgebildet sein.
Die Verteilung des Saatguts und/oder Düngers auf die einzelnen Ausbringelemente erfolgt üblicherweise mittels eines Verteilerkopfes, welcher über eine Förderleitung mit einem Dosierorgan verbunden ist. Der Verteilerkopf weist außerdem mehrere Ausgangsöffnungen auf, welche jeweils über eine Ausbringleitung mit einem Ausbringelement verbunden sind.
Bei der Segment- und Einzelreihenabschaltung werden üblicherweise einzelne mit einem Ausbringelement verbundene Ausgangsöffnungen des Verteilerkopfes oder einzelne mit einem Ausbringelement verbundene Ausbringleitungen blockiert. Durch das Blockieren der Ausgangsöffnungen oder Ausbringleitungen werden häufig die entsprechenden Luftströme in die Förderleitung zurückgeführt und/oder zurückgestaut. Durch die zurückgeführten und/oder zurückgestauten Luftströme baut sich ein Gegendruck auf, welcher zu einem Zusammenbrechen der pneumatischen Förderung des zu verteilenden Materials zu dem Verteilerkopf führt, wenn der Gegendruck den Druck des Fördergebläses übersteigt.

Um ein Zusammenbrechen der Materialförderung zu dem Verteilerkopf bei der Segment- und Einzelreihenabschaltung zu verhindern, ist man dazu übergegangen, die Ausgangsöffnungen des Verteilerkopfes mit Rückführeinrichtungen zu verbinden, über welche ein von dem Materialstrom separierter Luftstrom trotz einer Blockade der jeweiligen Ausgangsöffnung oder der jeweiligen Ausbringleitung zu dem entsprechenden Ausbringelement geleitet werden kann. Verteilmaschinen, deren Verteilerkopf mit derartigen Rückführeinrichtungen gekoppelt sind, sind beispielsweise aus den Druckschriften EP 0 799 560 B1 und EP 0 642 729 A1 bekannt.

Außerdem ist aus der Druckschrift WO 2017/055266 A1 eine Verteilmaschine bekannt, deren Rückführeinrichtungen eine Weiche mit einem Umschaltelement aufweisen, wobei das Umschaltelement zwischen einer Ausbringstellung und einer Rückführstellung verbringbar ist und in der Rückführstellung des Umschaltelements die Weiche ein Luft-Material-Gemisch einem Rückführpfad der jeweiligen Rückführeinrichtung zuführt, welcher mit der Förderleitung verbunden ist und eine Abzweigung aufweist, an welcher der Rückführpfad über eine Bypass-Leitung mit einem mit einer Ausbringleitung verbundenen Ausbringpfad verbunden ist.

Bei diesen und anderen bekannten Lösungen besteht jedoch das Problem, dass zusätzlich zu dem separierten Luftstrom eine gewisse Materialmenge durch die jeweilige Bypass-Leitung in Richtung der jeweiligen Ausbringelemente gefördert wird, wenn sich das Umschaltelement in der Rückführstellung befindet. Hierdurch kommt es zu einer unbeabsichtigten Ausbringung von Saatgut und/oder Dünger, wodurch die notwendige Gesamtmenge an Saatgut und/oder Dünger teilweise erheblich gesteigert wird. Durch die gesteigerte Gesamtmenge an Saatgut und/oder Dünger entstehen letztendlich höhere Kosten, welche es im Rahmen einer effizienten und bedarfsgerechten Ausbringung von Saatgut und/oder Dünger zu vermeiden gilt.

Die der Erfindung zugrunde liegende Aufgabe besteht somit darin, die unbeabsichtigte Ausbringung von Saatgut und/oder Dünger während der Segment- oder Einzelreihenabschaltung bei pneumatischen Verteilmaschinen zu verringern.

Die Aufgabe wird gelöst durch eine Verteilmaschine der eingangs genannten Art, wobei die Bypass-Leitung derart ausgebildet ist, dass über den Rückführpfad in die Bypass-Leitung gelangtes Material zumindest teilweise wieder dem Rückführpfad zugeführt wird, wobei die Bypass-Leitung einen Material-Umlenkabschnitt aufweist, welcher dazu eingerichtet ist, über den Rückführpfad in die Bypass-Leitung gelangtes Material in Richtung des Rückführpfads umzulenken.
Die Erfindung macht sich die Erkenntnis zunutze, dass die Ansaugung von Material in die Bypass-Leitung nicht ohne Weiteres verhindert werden kann, sodass zur Reduzierung der unbeabsichtigten Ausbringung von Saatgut und/oder Dünger eine Rückführung von in die Bypass-Leitung gelangtem Material notwendig ist. Erfindungsgemäß weist die Bypass-Leitung einen Material-Umlenkabschnitt auf, welcher dazu eingerichtet ist, über den Rückführpfad in die Bypass-Leitung gelangtes Material in Richtung des Rückführpfads umzulenken.
Vorzugsweise prallt zumindest ein Teil des über den Rückführpfad in die Bypass-Leitung gelangten Materials auf den Material-Umlenkabschnitt auf und wird durch die Krümmung des Material-Umlenkabschnitts umgelenkt. Ferner wird ein Teil der in die Bypass-Leitung gelangten Luft an dem Material-Umlenkabschnitt umgeleitet und unterstützt somit die Umlenkung des Materials in Richtung des Rückführpfads. Vorzugsweise weist der Material-Umlenkabschnitt eine Biegung oder Krümmung auf, welche durch Reibung Bewegungsenergie des Materials tilgt. Vorzugsweise ist der Material-Umlenkabschnitt dazu eingerichtet, eine Umlenkung des über den Rückführpfad in die Bypass-Leitung gelangten Materials von 150 bis 210°, vorzugsweise etwa 180°, herbeizuführen.
Die Rückführung von in die Bypass-Leitung gelangtem Material in den Rückführpfad erfolgt vorzugsweise dadurch, dass in die Bypass-Leitung gelangtes Material durch eine Umlenkung von dem in die Bypass-Leitung einströmenden Luftstrom getrennt wird, bevor das von dem Luftstrom getrennte Material wieder zurück in den jeweiligen Rückführpfad geleitet wird. Wenn sich das Umschaltelement in der Ausbringstellung befindet, wird das in die jeweilige Rückführeinrichtung einströmende Luft-Material-Gemisch vorzugsweise direkt einem Ausbringpfad der Rückführeinrichtung zugeleitet, wobei das Luft-Material-Gemisch von dem Ausbringpfad der Rückführeinrichtung über eine Ausbringleitung zu einem Ausbringelement gefördert wird. Jede Ausbringöffnung des Verteilerkopfes ist somit pneumatisch über eine Ausbringleitung mit zumindest einem Ausbringelement verbunden. Vorzugsweise ist der Verteilerkopf radialsymmetrisch ausgebildet. Die Verteilmaschine umfasst vorzugsweise zumindest einen Vorratsbehälter zur Bevorratung des zumindest einen zu verteilenden Materials, wobei dem Vorratsbehälter das Dosierorgan zugeordnet ist, welches das zu verteilende Material in einstellbaren Mengen in die pneumatisch beaufschlagte Förderleitung einspeist, in welcher das zu verteilende Material als Luft-Material-Gemisch gefördert wird. Insbesondere sind die Ausgangsöffnungen entlang des Umfangs des Verteilerkopfes, vorzugsweise gleichmäßig, zueinander beabstandet angeordnet. Die jeweiligen Weichen sind vorzugsweise benachbart zu der zugeordneten Ausgangsöffnung angeordnet.

In einer bevorzugten Ausführungsform der erfindungsgemäßen Verteilmaschine ist innerhalb der Bypass-Leitung ein Leitelement angeordnet, welches dazu eingerichtet ist, die Strömung innerhalb der Bypass-Leitung zu beeinflussen. Das Leitelement ist vorzugsweise länglich und/oder als Steg ausgebildet. Vorzugsweise ist das Leitelement derart innerhalb der Bypass-Leitung angeordnet, dass auf der einen Seite des Leitelements das in die Bypass-Leitung einströmende Luft-Material-Gemisch strömt und auf der anderen Seite des Leitelements das über den Rückführpfad in die Bypass-Leitung gelangte Material zurück in den Rückführpfad strömt. Vorzugsweise weist das Luft-Material-Gemisch auf der einen Seite des Leitelements eine entgegengesetzte Strömungsrichtung zu dem auf der anderen Seite des Leitelements strömenden Materials auf.

In einer Weiterbildung der erfindungsgemäßen Verteilmaschine teilt das Leitelement einen Bereich der Bypass-Leitung in einen Einströmabschnitt, in welchen das Luft-Material-Gemisch aus dem Rückführpfad einströmt und einen Ausströmabschnitt, aus welchem ein Luft-Material-Gemisch wieder in den Rückführpfad zurückströmt. Vorzugsweise weist die Bypass-Leitung einen oder mehrere Umlenkabschnitte auf, welche den direkten Strömungsweg zwischen der Abzweigung der Rückführeinrichtung und dem Ausbringpfad der Rückführeinrichtung oder einer mit der Rückführeinrichtung verbundenen Ausbringleitung blockieren, sodass das in die Bypass-Leitung eintretende Luft-Material-Gemisch zwangsläufig ein oder mehrere Male umgelenkt werden muss, bevor zumindest Teile des eingeströmten Luft-Material-Gemisches den Ausbringpfad der Rückführeinrichtung oder die Ausbringleitung erreichen. Vorzugsweise weist das in den Rückführpfad zurückströmende Luft-Material-Gemisch einen geringeren Luftanteil auf als das in die Bypass-Leitung einströmende Luft-Material-Gemisch. Dies ist darauf zurückzuführen, dass ein Großteil der Luft des in die Bypass-Leitung einströmenden Luft-Material-Gemisches über die Ausbringleitung einem Ausbringelement zugeleitet wird. Das Material des in die Bypass-Leitung einströmenden Luft-Material-Gemisches wird hingegen durch eine Umleitung zurück in den Rückführpfad geleitet.

Außerdem ist eine erfindungsgemäße Verteilmaschine bevorzugt, bei welcher die Bypass-Leitung einen Luft-Umlenkabschnitt aufweist, welcher dazu eingerichtet ist, über den Rückführpfad in die Bypass-Leitung gelangte Luft in Richtung des Ausbringpfads umzulenken. Vorzugweise ist der Luft-Umlenkabschnitt in Strömungsrichtung des Luft-Material-Gemisches hinter dem Material-Umlenkabschnitt angeordnet. Vorzugsweise ist der Luft-Umlenkabschnitt dazu eingerichtet, über den Rückführpfad in die Bypass-Leitung gelangte Luft in eine erste Richtung umzulenken. Ferner ist der Material-Umlenkabschnitt vorzugsweise dazu eingerichtet, über den Rückführpfad in die Bypass-Leitung gelangtes Material in eine zweite Richtung umzulenken. Vorzugsweise unterscheiden sich die erste Richtung und die zweite Richtung, wobei die erste Richtung und die zweite Richtung vorzugsweise in entgegengesetzte Richtungen führen.
In einer vorteilhaften Ausführungsform der erfindungsgemäßen Verteilmaschine befindet sich am Luft-Umlenkabschnitt eine Strömungsabrisskante, an welcher die Luft aufgrund eines geringeren Gegendrucks in den Ausbringpfad geleitet wird. Dadurch, dass der Druck innerhalb des Ausbringpfads geringer ist als der Druck innerhalb der Bypass-Leitung im Bereich der Strömungsabrisskante ergibt sich eine Sogwirkung, welche die Luft in Richtung des Ausbringpfads fördert. Von dem Ausbringpfad wird die Luft über eine Ausbringleitung dem entsprechenden Ausbringelement zugeführt.

Ferner ist eine erfindungsgemäße Verteilmaschine bevorzugt, bei welcher der Rückführpfad eine düsenartige Einschnürung aufweist und die Abzweigung des Rückführpfads in Förderrichtung vorzugsweise unmittelbar vor der düsenartigen Einschnürung angeordnet ist. Die düsenartige Einschnürung hindert vorzugsweise einen Großteil des Materials daran, in die Bypass-Leitung einzutreten. Dadurch, dass die Abzweigung des Rückführpfads in Förderrichtung unmittelbar vor der düsenartigen Einschnürung angeordnet ist, befördert die düsenartige Einschnürung durch eine Sogwirkung Material aus dem Ausströmabschnitt der Bypass-Leitung in den Rückführpfad.

In einer Weiterbildung der erfindungsgemäßen Verteilmaschine mündet ein Endbereich der Förderleitung in den Verteilerkopf und/oder die Förderleitung weist in einem Endbereich eine düsenartige Einschnürung auf. Die Förderleitung und dessen Endbereich verlaufen vorzugsweise zumindest annähernd senkrecht. Die düsenartige Einschnürung der Förderleitung ist vorzugsweise dazu eingerichtet, das die Förderleitung durchströmende zu verteilende Material daran zu hindern, in die mit der Förderleitung verbundenen Rückführleitungen einzutreten.

Ferner ist eine erfindungsgemäße Verteilmaschine bevorzugt, bei welcher jeder Rückführpfad über eine Rückführleitung mit der Förderleitung verbunden ist. Wenn jeder Rückführpfad über eine Rückführleitung mit der Förderleitung verbunden ist, wird das über den Rückführpfad in die Bypass-Leitung gelangte Material, welches wieder in den Rückführpfad zurückgeführt wird, über eine Rückführleitung wieder in die Förderleitung eingespeist.

Außerdem ist eine erfindungsgemäße Verteilmaschine bevorzugt, bei welcher jeweils mehrere Rückführleitungen in ein Sammelelement münden und die Sammelelemente mit der Förderleitung verbunden sind. Vorzugsweise münden zwei, drei, vier oder fünf benachbarte Rückführleitungen oder die Hälfte, ein Viertel, ein Achtel oder ein Sechzehntel der gesamten Rückführleitungen jeweils in ein Sammelelement. Die Sammelelemente sind vorzugsweise mittels Sammelleitungen mit der Förderleitung verbunden. In diesem Fall ist die düsenartige Einschnürung der Förderleitung vorzugsweise dazu eingerichtet, das die Förderleitung durchströmende zu verteilende Material daran zu hindern, in die mit der Förderleitung verbundenen Sammelleitungen einzutreten.

In einer weiteren bevorzugten Ausführungsform der erfindungsgemäßen Verteilmaschine münden die Rückführleitungen oder Sammelleitungen oberhalb der düsenartigen Einschnürung in die Förderleitung. Die Rückführleitungen oder Sammelleitungen münden vorzugsweise in Förderrichtung unmittelbar hinter der düsenartigen Einschnürung in die Förderleitung.

In einer weiteren Ausführungsform der erfindungsgemäßen Verteilmaschine ist die düsenartige Einschnürung der Förderleitung dazu eingerichtet, durch eine Sogwirkung Material aus den Rückführleitungen oder Sammelleitungen in die Förderleitung rückzuführen. Ferner ist die düsenartige Einschnürung der Förderleitung vorzugsweise dazu eingerichtet, das die Förderleitung durchströmende zu verteilende Material daran zu hindern, in die mit der Förderleitung verbundenen Rückführleitungen oder Sammelleitungen einzutreten. Dies wird dadurch erreicht, dass die düsenartige Einschnürung der Förderleitung eine Sogwirkung entfaltet, wobei die Sogwirkung das zu verteilende Material an den Öffnungen zu den Rückführleitungen vorbei in Richtung des Verteilerkopfes lenkt.

In einer besonders bevorzugten Ausführungsform der erfindungsgemäßen Verteilmaschine ist die Wandung der Förderleitung zumindest abschnittsweise wellenförmig ausgebildet. Durch die wellenförmige Bewandung der Förderleitung wird ein Anhaften des Materials an der Wandung verhindert. Außerdem bildet sich durch die wellenförmige Ausbildung der Wandung der Förderleitung eine geeignete Strömung innerhalb der Förderleitung aus. Dadurch führt die wellenförmige Ausbildung der Wandung der Förderleitung zu einer homogenen Verteilung Materials innerhalb des Luftstroms.

Außerdem ist eine erfindungsgemäße Verteilmaschine bevorzugt, welche ein Steuersystem aufweist. Das Steuersystem weist eine Speichereinheit, eine Erfassungseinrichtung und/oder eine Auswerteeinheit auf, wobei die Auswerteeinheit anhand in der Speichereinheit hinterlegter und/oder von der Erfassungseinrichtung erfasster Daten Ausbringparameter ermittelt und durch das Steuersystem basierend auf den Ausbringparametern Betätigungsmittel ansteuerbar sind, welche die Umschaltelemente individuell zwischen ihrer Ausbringstellung und ihrer Rückführstellung verbringen. Vorzugsweise ist das Steuersystem dazu eingerichtet, das Dosierorgan basierend auf der Vortriebsgeschwindigkeit der Verteilmaschine, einer Förderdauer des zu verteilenden Materials vom Dosierorgan zum Verteilerkopf und einer Förderdauer des zu verteilenden Material vom Verteilerkopf zu den Ausbringelementen derart zu steuern, dass zu jeder Zeit vorauseilend die momentan notwendige Gesamtmenge des auszubringenden Materials am Verteilerkopf ansteht. Vorzugsweise ist das Umschaltelement anhand der ermittelten Ausbringparameter mittels eines vom Steuersystem, vorzugsweise automatisiert, betätigbaren Betätigungselements zwischen der die Ausbringleitung freigebenden Ausbringstellung und der die Ausbringleitung blockierenden Rückführstellung verbringbar. Vorzugsweise umfasst das Betätigungselement einen bistabilen Drehmagneten. Die Betätigung eines Umschaltelements mittels eines bistabilen Drehmagneten erlaubt die Realisierung von äußerst kurzen Schaltzeiten, sodass das Blockieren oder Freigeben der Ausbringleitungen mit einer hohen zeitlichen Präzision erfolgen kann. Das Umschaltelement ist vorzugsweise aus einem Metall oder einer Metalllegierung ausgebildet und derart angelenkt, dass das Umschaltelement über die Betätigung des Betätigungselements in zumindest zwei Drehwinkelstellungen gebracht werden kann. In einer ersten Drehwinkelstellung blockiert das Umschaltelement dabei die Ausbringleitung. In einer zweiten Drehwinkelstellung gibt das Umschaltelement die Ausbringleitung frei und blockiert vorzugsweise zugleich den Rückführpfad.

In einer Weiterbildung der erfindungsgemäßen Verteilmaschine entsprich die von dem Dosierorgan auf Basis der ermittelten Ausbringparameter in die Förderleitung eingespeiste Menge zu verteilenden Materials einer von der Auswerteeinheit ermittelten notwendigen Gesamtmenge zu verteilenden Materials wobei sich die am Verteilerkopf notwendige Gesamtmenge an zu verteilendem Material bezüglich der notwendigen Gesamtmenge an zu verteilendem Material, welche benötigt wird, wenn keine der Ausbringleitungen blockiert ist, vorzugsweise ebenso verhält, wie die Anzahl der nicht blockierten Ausbringleitungen bezüglich der Gesamtzahl aller Ausbringleitungen.
Auf diese Weise steht bei einer Blockade oder Freigabe einzelner Ausbringleitungen im Rahmen einer Segment- oder Einzelreihenabschaltung stets eine auf die Anzahl der blockierten bzw. freigegebenen Ausbringleitungen angepasste Menge an zu verteilendem Material im Verteilerkopf bereit.
Die von dem Dosierorgan auf Basis der ermittelten Ausbringparameter in die Förderleitung eingespeiste Menge zu verteilenden Materials entspricht vorzugsweise der, insbesondere nach Ablauf der Förderdauer des zu verteilenden Materials vom Dosierorgan zum Verteilerkopf, am Verteilerkopf notwendigen Gesamtmenge an zu verteilendem Material, wobei sich die, insbesondere nach Ablauf der Förderdauer des zu verteilenden Materials vom Dosierorgan zum Verteilerkopf, am Verteilerkopf notwendige Gesamtmenge an zu verteilendem Material bezüglich der notwendigen Gesamtmenge an zu verteilendem Material, welche benötigt wird, wenn keine der Ausbringleitungen blockiert ist, vorzugsweise ebenso verhält, wie die Anzahl der, insbesondere nach Ablauf der Förderdauer des zu verteilenden Materials vom Dosierorgan zum Verteilerkopf, nicht blockierten Ausbringleitungen bezüglich der Gesamtzahl aller Ausbringleitungen .
Ferner ist eine erfindungsgemäße Verteilmaschine vorteilhaft, bei welcher das rückgeführte Material innerhalb eines den Endbereich der Förderleitung, den Verteilerkopf, die Rückführpfade und die Rückführleitungen umfassenden Rückführbereichs zirkulieren kann. Dadurch, dass das rückgeführte Material innerhalb des Rückführbereichs zirkulieren kann, steht bei der Freigabe der Ausbringleitungen sofort ein gleichmäßiger Materialstrom zur Verfügung.
Weitere Einzelheiten der Erfindung sind der Figurenbeschreibung und den Zeichnungen zu entnehmen. Es zeigen
- Fig. 1: ein Ausführungsbeispiel der erfindungsgemäßen landwirtschaftlichen pneumatischen Verteilmaschine in einer perspektivischen Darstellung;
- Fig. 2: den Verteilerkopf der in der Fig. 1 dargestellten Verteilmaschine in einer perspektivischen Darstellung;
- Fig. 3: den Verteilerkopf der in der Fig. 1 dargestellten Verteilmaschine in einer Schnittdarstellung; und
- Fig. 4: eine Rückführeinrichtung einer erfindungsgemäßen landwirtschaftlichen pneumatischen Verteilmaschine in einer Schnittdarstellung.

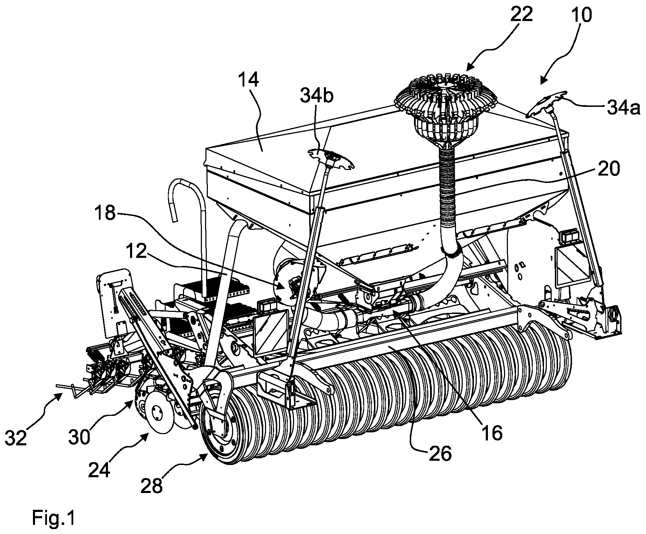

Die Fig. 1 zeigt eine als pneumatische Aufbausämaschine ausgebildete landwirtschaftliche pneumatische Verteilmaschine 10 zum Verteilen von körnigem Material, nämlich von Saatgut.

Die Verteilmaschine 10 umfasst einen Rahmenaufbau 12, an welchem ein Vorratsbehälter 14 angeordnet ist. Der Vorratsbehälter 14 ist dazu eingerichtet, das zu verteilende körnige Material zu bevorraten. Der Vorratsbehälter 14 ist über ein Dosierorgan 16 mit einer Förderleitung 20 verbunden, wobei das dosierte körnige Material mittels eines Fördergebläses 18 zu der Förderleitung 20 transportiert wird. Das Dosierorgan 16 ist dazu eingerichtet, das zu verteilende Material in einstellbaren Mengen in die pneumatisch beaufschlagte Förderleitung 20 einzuspeisen, wobei das zu verteilende Material in der Förderleitung 20 als Luft-Material-Gemisch gefördert wird. Das Fördergebläse 18 wird beispielsweise über einen Hydraulikmotor angetrieben und verursacht einen ausreichenden Druck, um das körnige zu verteilende Material durch die Förderleitung 20 zu einem Verteilerkopf 22 zu transportieren.

Der Verteilerkopf 22 weist mehrere Ausgangsöffnungen auf. Die Ausgangsöffnungen sind gleichmäßig entlang des Umfangs der Verteilerkopfes 22 verteilt, sodass benachbarte Ausgangsöffnungen jeweils äquidistant voneinander beabstandet angeordnet sind. Jede Ausgangsöffnung ist pneumatisch über eine Rückführeinrichtung und eine mit der Rückführeinrichtung verbundene Ausbringleitung (ausgeblendet) mit einem als Säschar ausgebildeten Ausbringelement 24 verbunden. Die Ausbringelemente 24 sind an einem Tragrahmen 26 befestigt und jeweils dazu eingerichtet, das zu verteilende körnige Material in einer Furche des Ackerbodens abzulegen.

In Fahrtrichtung vor den Ausbringelementen 24 ist eine Walze 28 angeordnet, welche als Keilringwalze ausgebildet und dazu eingerichtet ist, den zuvor bearbeiteten Ackerboden rückzuverfestigen. In Fahrtrichtung hinter den Ausbringelementen 24 sind Tiefenführungsrollen 30 angeordnet, wobei jeweils einem Ausbringelement 24 eine Tiefenführungsrolle 30 zugeordnet ist. Mittels der Tiefenführungsrollen 30 lässt sich die Ablagetiefe des zu verteilenden körnigen Materials einstellen. In Fahrtrichtung hinter den Tiefenführungsrollen 30 sind außerdem Striegel 32 angeordnet, welche dazu eingerichtet sind, das abgelegte körnige Material mit einer einstellbaren Intensität mit loser Erde zu bedecken. Die dargestellten Striegel 32 sind in Zinkenbauweise ausgeführt, wobei alternativ auch Rollenstriegel zum Einsatz kommen können.

Außerdem weist die landwirtschaftliche pneumatische Verteilmaschine 10 zwei Spuranreißer 34a, 34b auf, welche jeweils dazu eingerichtet sind, eine Markierung auf dem Ackerboden zu erzeugen. Die Markierungen zeigen die benachbarte Fahrspur an.

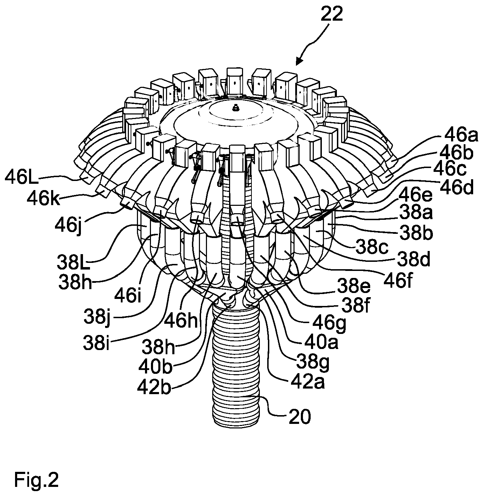

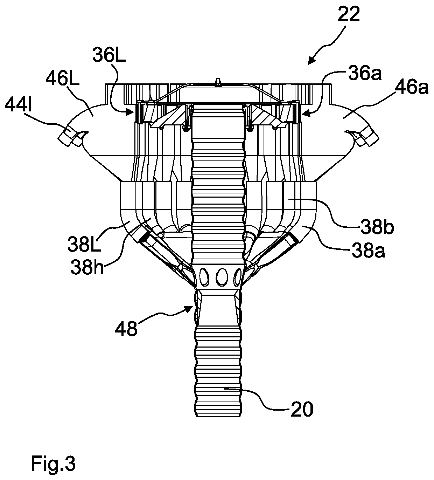

Die Fig. 2 und die Fig. 3 zeigen den Verteilerkopf 22 der in der Fig. 1 dargestellten Verteilmaschine 10, wobei die Ausgangsöffnungen 36a, 36l des Verteilerkopfes 22 jeweils mit einer Rückführeinrichtung 46a-46l verbunden sind.

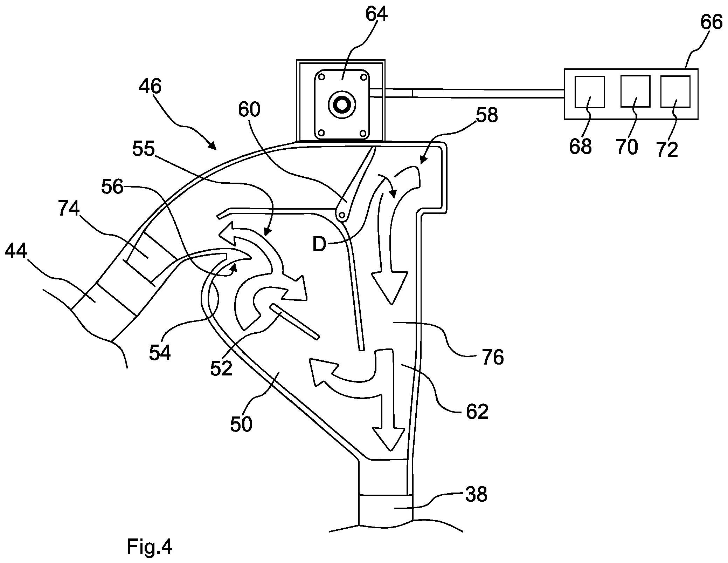

Die Rückführeinrichtungen 46a-46l umfassen jeweils einen Ausbringpfad, welche den Verteilerkopf 22 pneumatisch mit den Ausbringleitungen und den Ausbringelementen verbinden. Ferner umfassen die Rückführeinrichtungen 46a-46l jeweils einen Rückführpfad, welche den Verteilerkopf 22 pneumatisch mit Rückführleitungen 38a-38l und der Förderleitung 20 verbinden. Die Ausbringpfade und die Rückführpfade, also auch die Ausbringleitungen und Rückführleitungen 38a-38l, sind über Umschaltelemente 60 (siehe Fig. 4) in den Rückführeinrichtungen 46a-46l blockierbar und freigebbar.

Jeweils drei benachbarte Rückführleitungen 38a-38l münden dabei in ein Sammelelement 40a, 40b, wobei die Sammelelemente 40a, 40b jeweils über eine Sammelleitung 42a, 42b mit der Förderleitung 20 verbunden sind. Außerdem weist die Förderleitung 20 eine düsenartige Einschnürung 48 auf. Die Sammelleitungen 42a, 42b münden unmittelbar oberhalb der düsenartigen Einschnürung 48 in die Förderleitung 20. Die düsenartige Einschnürung 48 hindert Material daran beim Aufsteigen in der Förderleitung 20 über die Sammelleitungen 42a, 42b und die Sammelelemente 40a, 40b in die Rückführleitungen 38a-38l einzutreten.

Über die Ausbringpfade und die Ausbringleitungen 44a-44l kann das körnige zu verteilende Material den Ausbringelementen zugeführt werden. Über die Rückführpfade und die Rückführleitungen 38a-38l kann das körnige zu verteilende Material in die Förderleitung 20 zurückgeleitet werden. Ein Zuführbereich umfasst einen Endbereich der Förderleitung 20, den Verteilerkopf 22, die Rückführpfade und die Rückführleitungen 38a-38l, wobei das rückgeführte Material innerhalb des Zuführbereichs zirkulieren kann.

Über ein Steuersystem können die Ausbringleitungen 44a-44l und Rückführleitungen 38a-38l gezielt blockiert und freigegeben und das Dosierorgan 16 gesteuert werden, wobei die Steuerung derart erfolgt, dass zu jeder Zeit vorauseilend eine ermittelte notwendige Gesamtmenge des auszubringenden Materials im Rückführbereich zirkuliert und bei Freigabe zumindest einer zuvor blockierten Ausbringleitung ohne Verzögerung eine notwendige Teilmenge der entsprechenden Ausbringleitung zugeführt wird.

Die Fig. 4 zeigt beispielhaft eine Rückführeinrichtung 46, wobei die Rückführeinrichtungen 46a-46l der in den Fig. 1 bis 3 dargestellten Verteilmaschine 10 beispielsweise entsprechend der in der Fig. 4 dargestellten Rückführeinrichtung 46 ausgebildet sein können.

Der Rückführpfad 76 der Rückführeinrichtung 46 weist eine Abzweigung auf, welche mit einer Bypass-Leitung 50 verbunden ist. Die Bypass-Leitung 50 ist derart ausgebildet, dass über den Rückführpfad 76 in die Bypass-Leitung 50 gelangtes Material zumindest teilweise wieder dem Rückführpfad 76 zugeführt wird. Die Bypass-Leitung 50 mündet in den Ausbringpfad 74 der Rückführeinrichtung 46. An den Rückführpfad 76 schließt sich eine Rückführleitung 38 an, welche mit der Förderleitung (nicht dargestellt) verbunden ist. An den Ausbringpfad 74 schließt sich eine Ausbringleitung 44 an, welche mit einem Ausbringelement (nicht dargestellt) verbunden ist.

Der Rückführpfad 76 weist eine düsenartige Einschnürung 62 auf, welche Material daran hindert, in die Bypass-Leitung 50 einzutreten. Die düsenartige Einschnürung 62 erzeugt eine Sogwirkung, sodass Material aus dem Rückführpfad 76 in die Förderleitung zurückgeführt wird. Zudem wird eine erhöhte Strömungsgeschwindigkeit in der Förderleitung 20 erreicht, welche das geförderte und das rückgeführte Material in Richtung des Verteilerkopfes 22 beschleunigt.

Innerhalb der Rückführeinrichtung 46 ist eine Weiche 58 mit einem Umschaltelement 60 angeordnet, mittels welchem der Ausbringpfad 74 und somit die Ausbringleitung 44 blockierbar sind, sodass das Eintreten eines Luft-Material-Gemisches in die Ausbringleitung 44 unterbunden wird. Das Umschaltelement 60 kann mittels eines betätigbaren Betätigungselements 64 zwischen einer die Ausbringleitung 44 freigebenden Ausbringstellung und einer die Ausbringleitung 44 blockierenden Rückführstellung verbracht werden. Das Betätigungselement 64 umfasst einen bistabilen Drehmagneten, welcher dazu eingerichtet ist, eine Drehbewegung des Umschaltelements 60 in die Drehrichtung D zu verursachen, um das Umschaltelement 60 zwischen der Ausbringstellung und der Rückführstellung zu verfahren. Wenn eine Ausbringleitung 44 mittels des Umschaltelements 60 blockiert wird, zirkuliert das Luft-Material-Gemisch in einem Zuführbereich, welcher einen Endbereich der Förderleitung, den Rückführpfad 76 die Rückführleitung 38 und den Verteilerkopf umfasst. In seiner die Ausbringleitung 44 freigebenden Ausbringstellung blockiert das Umschaltelement 60 zugleich den Rückführpfad 76.

Das Betätigungselement 64 wird über das Steuersystem 66 automatisiert gesteuert. Die Ansteuerung des das Umschaltelement 60 verbringenden Betätigungselements 64 basiert individuell zusätzlich auf der Förderdauer zwischen dem Verteilerkopf 22 und dem Ausbringelement 24 und erfolgt derart, dass zu jeder Zeit die notwendige Teilmenge ohne Verzögerung am Verteilerkopf 22 und/oder am entsprechenden Ausbringelement 24 verfügbar ist.

In der Rückführstellung des Umschaltelements 60 wird Luft des Luft-Material-Gemisches der Ausbringleitung 44 über die Bypass-Leitung 50 und den Ausbringpfad 74 zugeführt. Auf diese Weise wird verhindert, dass durch ein Blockieren mehrerer Ausbringleitungen 44 die pneumatische Förderung des zu verteilenden Materials zu dem Verteilerkopf 22 zusammenbricht. Die pneumatische Förderung des zu verteilenden Materials zu dem Verteilerkopf 22 würde nämlich zusammenbrechen, wenn sich durch die Rückführung ein Gegendruck einstellt, welcher größer ist als der Druck, den das Fördergebläse 18 verursacht. Durch die Bypass-Leitung 50 wird zumindest ein Teil des Luftstroms von dem zu verteilenden Material getrennt und zu den Ausbringelementen 24 weitergeleitet.

Beim Einströmen in die Bypass-Leitung 50 wird jedoch ein geringer Anteil des körnigen zu verteilenden Materials mit in die Bypass-Leitung 50 hineingezogen. Durch das im direkten Verbindungsweg zwischen dem Rückführpfad 76 und dem Ausbringpfad 74 innerhalb der Bypass-Leitung 50 angeordnete und als Steg ausgebildete Leitelement 52 wird das in die Bypass-Leitung 50 einströmende Luft-Material-Gemisch in Richtung eines Material-Umlenkabschnitts 54 geleitet, welcher in dem direkten Strömungsweg zum Ausbringpfad 74 angeordnet ist und eine Umlenkung des Luft-Material-Gemisches verursacht. An den Material-Umlenkabschnitt 54 schließt sich ein Luft-Umlenkabschnitt 55 an, welcher eine Abrisskante 56 umfasst. Die Abrisskante 56 verursacht einen Strömungsabriss, sodass ein Teil der Luft des Luft-Material-Gemisches in Richtung des Ausbringpfads 74 umgelenkt wird. Die übrige Luft des Luft-Material-Gemisches sowie das Material des Luft-Material-Gemisches werden wieder aus der Bypass-Leitung 50 herausgeleitet und der Förderleitung zugeführt.

Das Steuersystem 66 ist außerdem dazu eingerichtet, das Dosierorgan der zugehörigen Verteilmaschine zu steuern, wobei das Steuersystem 66 dazu eingerichtet ist, das Dosierorgan basierend auf der Vortriebsgeschwindigkeit der Verteilmaschine, einer Förderdauer des zu verteilenden Materials vom Dosierorgan zum Verteilerkopf und einer Förderdauer des zu verteilenden Materials vom Verteilerkopf zu den Ausbringelementen, derart anzusteuern, dass zu jeder Zeit vorauseilend die momentan notwenige Gesamtmenge des auszubringenden Materials am Verteilerkopf ansteht.

Das Steuersystem 66 umfasst hierzu eine Speichereinheit 68, eine Erfassungseinrichtung 70 und eine Auswerteeinheit 72. Die Auswerteeinheit 72 ist dazu eingerichtet, anhand von Daten, welche in der Speichereinheit 68 hinterlegt sind, oder anhand von Daten, welche von der Erfassungseinrichtung 70 erfasst werden, Ausbringparameter zu ermitteln, welche eine momentan notwendige Gesamtmenge des zu verteilenden Materials, eine Förderdauer des zu verteilenden Materials von dem Dosierorgan zum Verteilerkopf und eine Förderdauer des zu verteilenden Materials von dem Verteilerkopf zu den Ausbringelementen umfassen. Das Steuersystem 66 steuert das Dosierorgan 16 dabei derart, dass sich die in die Förderleitung eingespeiste Menge zu verteilenden Materials der am Verteilerkopf 22 notwendigen Gesamtmenge an zu verteilendem Material entspricht, wobei sich die am Verteilerkopf 22 notwendige Gesamtmenge an zu verteilendem Material bezüglich der notwendigen Gesamtmenge an zuverteilendem Material, welche benötigt wird, wenn keine der Ausbringleitungen 44, 44a-44l blockiert ist, vorzugsweise ebenso verhält, wie die Anzahl der nicht blockierten Ausbringleitungen 44, 44a-44l bezüglich der Gesamtzahl aller Ausbringleitungen 44, 44a-44l.

### Bezugszeichenliste

- 10: Verteilmaschine
- 12: Rahmenaufbau
- 14: Vorratsbehälter
- 16: Dosierorgan
- 18: Fördergebläse
- 20: Förderleitung
- 22: Verteilerkopf
- 24: Ausbringelemente
- 26: Tragrahmen
- 28: Walze
- 30: Tiefenführungsrollen
- 32: Striegel
- 34a, 34b: Spuranreißer
- 36a, 36l: Ausgangsöffnungen
- 38, 38a-38l: Rückführleitungen
- 40a, 40b: Sammelelemente
- 42a, 42b: Sammelleitungen
- 44: Ausbringleitung
- 46, 46a-46l: Rückführeinrichtungen
- 48: Einschnürung
- 50: Bypass-Leitung
- 52: Leitelement
- 54: Material-Umlenkabschnitt
- 55: Luft-Umlenkabschnitt
- 56: Abrisskante
- 58: Weiche
- 60: Umschaltelement
- 62: Einschnürung
- 64: Betätigungselement
- 66: Steuersystem
- 68: Speichereinheit
- 70: Erfassungseinrichtung
- 72: Auswerteeinheit
- 74: Ausbringpfad
- 76: Rückführpfad

- D: Drehrichtung

## Patentansprüche

1. Landwirtschaftliche pneumatische Verteilmaschine (10) zum Verteilen zumindest eines zu verteilenden körnigen Materials, vorzugsweise Saatguts und/oder Düngemittels, mit
- zumindest einem Verteilerkopf (22), welcher über eine Förderleitung (20) mit einem Dosierorgan (16) verbunden ist, wobei der Verteilerkopf (22) mehrere Ausgangsöffnungen (36a, 36l) aufweist, und
- mehreren Rückführeinrichtungen (46, 46a-46l), welche jeweils zwischen einer Ausgangsöffnung (36a, 36l) des zumindest einen Verteilerkopfs (22) und einer mit zumindest einem Ausbringelement (24) verbundenen Ausbringleitung (44) angeordnet sind,
wobei in den Rückführeinrichtungen (46, 46a-46l) jeweils eine Weiche (58) mit einem Umschaltelement (60) angeordnet ist, welches zwischen einer Ausbringstellung und einer Rückführstellung verbringbar ist, wobei in der Rückführstellung des Umschaltelements (60) die Weiche (58) ein Luft-Material-Gemisch einem Rückführpfad (76) der jeweiligen Rückführeinrichtung (46, 46a-46l) zuführt, welcher mit der Förderleitung (20) verbunden ist und eine Abzweigung aufweist, an welcher der Rückführpfad (76) über eine Bypass-Leitung (50) mit einem mit einer Ausbringleitung (44) verbundenen Ausbringpfad (74) verbunden ist;
**dadurch gekennzeichnet, dass** die Bypass-Leitung (50) derart ausgebildet ist, dass über den Rückführpfad (76) in die Bypass-Leitung (50) gelangtes Material zumindest teilweise wieder dem Rückführpfad (76) zugeführt wird, wobei die Bypass-Leitung (50) einen Material-Umlenkabschnitt (54) aufweist, welcher dazu eingerichtet ist, über den Rückführpfad (76) in die Bypass-Leitung (50) gelangtes Material in Richtung des Rückführpfads (76) umzulenken.

2. Verteilmaschine (10) nach Anspruch 1,
**dadurch gekennzeichnet, dass** der Material-Umlenkabschnitt (54) eine Biegung oder Krümmung aufweist, welche durch Reibung Bewegungsenergie des Materials tilgt, wobei der Material-Umlenkabschnitt (54) vorzugsweise dazu eingerichtet ist, eine Umlenkung des über den Rückführpfad (76) in die Bypass-Leitung (50) gelangten Materials von 150 bis 210° herbeizuführen.

3. Verteilmaschine (10) nach Anspruch 1 oder 2,
**dadurch gekennzeichnet, dass** innerhalb der Bypass-Leitung (50) ein Leitelement (52) angeordnet ist, welches dazu eingerichtet ist, die Strömung innerhalb der Bypass-Leitung (50) zu beeinflussen.

4. Verteilmaschine (10) nach Anspruch 3,
**dadurch gekennzeichnet, dass** das Leitelement (52) einen Bereich der Bypass-Leitung (50) in einen Einströmabschnitt, in welchen das Luft-Material-Gemisch aus dem Rückführpfad (76) einströmt und einen Ausströmabschnitt, aus welchem ein Luft-Material-Gemisch wieder in den Rückführpfad (76) zurückströmt, teilt.

5. Verteilmaschine (10) nach einem der vorangegangenen Ansprüche,
**dadurch gekennzeichnet, dass** die Bypass-Leitung (50) einen Luft-Umlenkabschnitt (55) aufweist, welcher dazu eingerichtet ist, über den Rückführpfad (76) in die Bypass-Leitung (50) gelangte Luft in Richtung des Ausbringpfads (74) umzulenken.

6. Verteilmaschine (10) nach Anspruch 5,
**dadurch gekennzeichnet, dass** sich am Luft-Umlenkabschnitt (55) eine Strömungsabrisskante (56) befindet, an welcher die Luft aufgrund eines geringeren Gegendrucks in den Ausbringpfad (74) geleitet wird.

7. Verteilmaschine (10) nach einem der vorangegangenen Ansprüche,
**dadurch gekennzeichnet, dass** der Rückführpfad (76) eine düsenartige Einschnürung (62) aufweist und die Abzweigung des Rückführpfads (76) in Förderrichtung vorzugsweise unmittelbar vor der düsenartigen Einschnürung (62) angeordnet ist.

8. Verteilmaschine (10) nach einem der vorangegangenen Ansprüche,
**dadurch gekennzeichnet, dass** ein Endbereich der Förderleitung (20) in den Verteilerkopf (22) mündet und/oder die Förderleitung (20) in dem Endbereich eine düsenartige Einschnürung (48) aufweist.

9. Verteilmaschine (10) nach einem der vorangegangenen Ansprüche,
**dadurch gekennzeichnet, dass** jeder Rückführpfad (76) über eine Rückführleitung (38, 38a-38l) mit der Förderleitung (20) verbunden ist.

10. Verteilmaschine (10) nach Anspruch 9,
**dadurch gekennzeichnet, dass** jeweils mehrere Rückführleitungen (38, 38a-38l) in ein Sammelelement (40a, 40b) münden und die Sammelelemente (40a, 40b) mit der Förderleitung (20) verbunden sind.

11. Verteilmaschine (10) nach einem der vorangegangenen Ansprüche,
**dadurch gekennzeichnet, dass** mehrere Rückführleitungen (38, 38a-38l) oder Sammelleitungen (42a, 42b) in Förderrichtung hinter der düsenartigen Einschnürung (48) in die Förderleitung (20) münden.

12. Verteilmaschine (10) nach Anspruch 11,
**dadurch gekennzeichnet, dass** ein Endbereich der Förderleitung (20) in den Verteilerkopf (22) mündet, die Förderleitung (20) in dem Endbereich eine düsenartige Einschnürung (48) aufweist und die düsenartige Einschnürung (48) der Förderleitung (20) dazu eingerichtet ist, durch eine Sogwirkung Material aus den Rückführleitungen (38, 38a-38l) oder Sammelleitungen (42a, 42b) in die Förderleitung (20) rückzuführen.

13. Verteilmaschine (10) nach einem der vorangegangenen Ansprüche,
**dadurch gekennzeichnet, dass** die Wandung der Förderleitung (20) zumindest abschnittsweise wellenförmig ausgeführt ist.

14. Verteilmaschine (10) nach einem der vorangegangenen Ansprüche,
**gekennzeichnet durch** ein Steuersystem (66), welches eine Speichereinheit (68), eine Erfassungseinrichtung (70) und/oder eine Auswerteeinheit (72) umfasst, wobei die Auswerteeinheit (72) anhand in der Speichereinheit (68) hinterlegter und/oder von der Erfassungseinrichtung (70) erfasster Daten Ausbringparameter ermittelt und durch das Steuersystem (66) basierend auf den Ausbringparametern Betätigungsmittel ansteuerbar sind, welche die Umschaltelemente (60) individuell zwischen ihrer Ausbringstellung und ihrer Rückführstellung verbringen.

15. Verteilmaschine (10) nach zumindest einem der vorangegangenen Ansprüche,
**dadurch gekennzeichnet, dass** das rückgeführte Material innerhalb eines den Endbereich der Förderleitung (20), den Verteilerkopf (22), die Rückführpfade (76) und die Rückführleitungen (38, 38a-38l) umfassenden Rückführbereichs zirkulieren kann.

## Claims

1. Agricultural pneumatic distribution machine (10) for distributing at least one granular material to be distributed, preferably seed and/or fertilizer, having
- at least one distributor head (22), which is connected to a metering member (16) via a delivery line (20), wherein the distributor head (22) has a plurality of outlet openings (36a, 361), and
- a plurality of return devices (46, 46a-461), which are each arranged between an outlet opening (36a, 361) of the at least one distributor head (22) and a dispensing line (44) connected to at least one dispensing element (24),
wherein a diverter (58) having a switchover element (60) is arranged in each of the return devices (46, 46a-461), said switchover element (60) being shiftable between a dispensing position and a return position, wherein, in the return position of the switchover element (60), the diverter (58) feeds an air/material mixture to a return path (76) of the particular return device (46, 46a-461) that is connected to the delivery line (20) and has a branch, at which the return path (76) is connected via a bypass line (50) to a dispensing path (74) connected to a dispensing line (44);
**characterized in that** the bypass line (50) is configured such that material that has passed into the bypass line (50) via the return path (76) is at least partially fed back to the return path (76), wherein the bypass line (50) has a material deflection portion (54), which is set up to deflect material that has passed into the bypass line (50) via the return path (76) in the direction of the return path (76).

2. Distribution machine (10) according to Claim 1,
**characterized in that** the material deflection portion (54) has a bend or curve that absorbs kinetic energy of the material by friction, wherein the material deflection portion (54) is preferably configured to bring about a deflection through 150 to 210° of the material that has passed into the bypass line (50) via the return path (76).

3. Distribution machine (10) according to Claim 1 or 2,
**characterized in that**, within the bypass line (50), a guiding element (52) is arranged, which is configured to influence the flow within the bypass line (50).

4. Distribution machine (10) according to Claim 3,
**characterized in that** the guiding element (52) divides a region of the bypass line (50) into an inflow portion, in which the air/material mixture flows in from the return path (76), and an outflow portion, out of which an air/material mixture flows back into the return path (76) again.

5. Distribution machine (10) according to one of the preceding claims,
**characterized in that** the bypass line (50) has an air deflection portion (55), which is configured to deflect air that has passed into the bypass line (50) via the return path (76) in the direction of the dispensing path (74).

6. Distribution machine (10) according to Claim 5,
**characterized in that** in the air deflection portion (55) there is a flow separation edge (56), at which the air is guided into the dispensing path (74) on account of a lower counter-pressure.

7. Distribution machine (10) according to one of the preceding claims,
**characterized in that** the return path (76) has a nozzle-like constriction (62), and the branch of the return path (76) is arranged preferably immediately upstream of the nozzle-like constriction (62) in the delivery direction.

8. Distribution machine (10) according to one of the preceding claims,
**characterized in that** an end region of the delivery line (20) leads into the distributor head (22) and/or the delivery line (20) has a nozzle-like constriction (48) in the end region.

9. Distribution machine (10) according to one of the preceding claims,
**characterized in that** each return path (76) is connected to the delivery line (20) via a return line (38, 38a-381).

10. Distribution machine (10) according to Claim 9,
**characterized in that** in each case a plurality of return lines (38, 38a-381) lead into a collecting element (40a, 40b), and the collecting elements (40a, 40b) are connected to the delivery line (20) .

11. Distribution machine (10) according to one of the preceding claims,
**characterized in that** a plurality of return lines (38, 38a-381) or collecting lines (42a, 42b) lead into the delivery line (20) downstream of the nozzle-like constriction (48) in the delivery direction.

12. Distribution machine (10) according to Claim 11,
**characterized in that** an end region of the delivery line (20) leads into the distributor head (22), the delivery line (20) has a nozzle-like constriction (48) in the end region, and the nozzle-like constriction (48) of the delivery line (20) is configured to return material from the return lines (38, 38a-381) or collecting lines (42a, 42b) into the delivery line (20) by way of a suction effect.

13. Distribution machine (10) according to one of the preceding claims,
**characterized in that** the wall of the delivery line (20) is embodied at least locally in a corrugated manner.

14. Distribution machine (10) according to one of the preceding claims,
**characterized by** a control system (66), which comprises a memory unit (68), a detection device (70) and/or an evaluation device (72), wherein the evaluation device (72) uses data stored in the memory unit (68) and/or detected by the detection device (70) to determine dispensing parameters, and actuating means are able to be controlled by the control system (66) on the basis of the dispensing parameters, said actuating means shifting the switchover elements (60) individually between their dispensing position and their return position.

15. Distribution machine (10) according to at least one of the preceding claims,
**characterized in that** the returned material can circulate within a return region comprising the end region of the delivery line (20), the distributor head (22), the return paths (76) and the return lines (38, 38a-381).

## Revendications

1. Machine agricole distributrice pneumatique (10) servant à distribuer au moins une matière en grains à distribuer, de préférence des semences et/ou un engrais, comportant
- au moins une tête distributrice (22), laquelle est reliée à un organe de dosage (16) par le biais d'une conduite de transport (20), dans laquelle la tête distributrice (22) comprend plusieurs ouvertures de sortie (36a, 361), et
- plusieurs dispositifs de recirculation (46, 46a-461), lesquels sont disposés respectivement entre une ouverture de sortie (36a, 361) de ladite au moins une tête distributrice (22) et une conduite d'épandage (44) reliée à au moins un élément d'épandage (24),
dans laquelle un moyen d'aiguillage (58) doté d'un élément de commutation (60) est respectivement disposé dans les dispositifs de recirculation (46, 46a-461), lequel élément de commutation peut être déplacé entre une position d'épandage et une position de recirculation, dans lequel le moyen d'aiguillage (58) achemine un mélange d'air et de matière à une voie de recirculation (76) du dispositif de recirculation (46, 46a-461) respectif dans la position de recirculation de l'élément de commutation (60), laquelle voie de recirculation est reliée à la conduite de transport (20) et comprend une bifurcation au niveau de laquelle la voie de recirculation (76) est reliée, par le biais d'une conduite de dérivation (50), à une voie d'épandage (74) reliée à une conduite d'épandage (44) ;
**caractérisée en ce que** la conduite de dérivation (50) est réalisée de telle sorte que la matière parvenue dans la conduite de dérivation (50) par le biais de la voie de recirculation (76) est acheminée au moins partiellement à nouveau à la voie de recirculation (76), la conduite de dérivation (50) comprenant une partie de déviation de matière (54), laquelle est conçue pour dévier en direction de la voie de recirculation (76) la matière parvenue dans la conduite de dérivation (50) par le biais de la voie de recirculation (76).

2. Machine distributrice (10) selon la revendication 1,
**caractérisée en ce que** la partie de déviation de matière (54) présente une flexion ou une courbure, laquelle absorbe par friction l'énergie cinétique de la matière, la partie de déviation de matière (54) étant de préférence conçue pour provoquer une déviation de 150 à 210° de la matière parvenue dans la conduite de dérivation (50) par le biais de la voie de recirculation (76).

3. Machine distributrice (10) selon la revendication 1 ou 2,
**caractérisée en ce qu'**un élément de guidage (52) est disposé à l'intérieur de la conduite de dérivation (50), lequel est conçu pour influencer l'écoulement à l'intérieur de la conduite de dérivation (50).

4. Machine distributrice (10) selon la revendication 3,
**caractérisée en ce que** l'élément de guidage (52) divise une région de la conduite de dérivation (50) en une partie d'afflux (76) dans laquelle le mélange d'air et de matière afflue à partir de la voie de recirculation (76) et une partie de sortie, à partir de laquelle un mélange d'air et de matière retourne dans la voie de recirculation (76).

5. Machine distributrice (10) selon l'une des revendications précédentes,
**caractérisée en ce que** la conduite de dérivation (50) comprend une partie de déviation d'air (55), laquelle est conçue pour dévier en direction de la voie d'épandage (74) l'air parvenu dans la conduite de dérivation (50) par le biais de la voie de recirculation (76).

6. Machine distributrice (10) selon la revendication 5,
**caractérisée en ce qu'**une arête de décollement d'écoulement (56) se trouve au niveau de la partie de déviation d'air (55), arête niveau de laquelle l'air est guidé dans la voie d'épandage (74) en raison d'une contrepression plus faible.

7. Machine distributrice (10) selon l'une des revendications précédentes,
**caractérisée en ce que** la voie de recirculation (76) comprend un étranglement (62) de type buse et la bifurcation de la voie de recirculation (76) est disposée de préférence immédiatement avant l'étranglement (62) de type buse dans le sens de transport.

8. Machine distributrice (10) selon l'une des revendications précédentes,
**caractérisée en ce qu'**une région d'extrémité de la conduite de transport (20) débouche dans la tête distributrice (22) et/ou la conduite de transport (20) comprend un étranglement (48) de type buse dans la région d'extrémité.

9. Machine distributrice (10) selon l'une des revendications précédentes,
**caractérisée en ce que** chaque voie de recirculation (76) est reliée à la conduite de transport (20) par le biais d'une conduite de recirculation (38, 38a-381).

10. Machine distributrice (10) selon la revendication 9,
**caractérisée en ce que** respectivement plusieurs conduites de recirculation (38, 38a-381) débouchent dans un élément collecteur (40a, 40b) et les éléments collecteurs (40a, 40b) sont reliés à la conduite de transport (20).

11. Machine distributrice (10) selon l'une des revendications précédentes,
**caractérisée en ce que** plusieurs conduites de recirculation (38, 38a-381) ou conduites collectrices (42a, 42b) débouchent dans la conduite de transport (20) derrière l'étranglement (48) de type buse dans le sens de transport.

12. Machine distributrice (10) selon la revendication 11,
**caractérisée en ce qu'**une région d'extrémité de la conduite de transport (20) débouche dans la tête distributrice (22), la conduite de transport (20) comprend un étranglement (48) de type buse dans la région d'extrémité et l'étranglement (48) de type buse de la conduite de transport (20) est conçu pour, par un effet d'aspiration, renvoyer la matière provenant des conduites de recirculation (38, 38a-381) ou des conduites collectrices (42a, 42b) dans la conduite de transport (20).

13. Machine distributrice (10) selon l'une des revendications précédentes,
**caractérisée en ce que** la paroi de la conduite de transport (20) est réalisée de manière ondulée au moins dans certaines parties.

14. Machine distributrice (10) selon l'une des revendications précédentes,
**caractérisée par** un système de commande (66), lequel comporte une unité mémoire (68), un dispositif de détection (70) et/ou une unité d'évaluation (72), l'unité d'évaluation (72) déterminant, sur la base de données enregistrées dans l'unité mémoire (68) et/ou détectées par le dispositif de détection (70), des paramètres d'épandage et, au moyen du système de commande (66), sur la base des paramètres d'épandage, des moyens d'actionnement pouvant être commandés, lesquels déplacent les éléments de commutation (60) individuellement entre leur position d'épandage et leur position de recirculation.

15. Machine distributrice (10) selon au moins l'une des revendications précédentes,
**caractérisée en ce que** la matière recirculée peut circuler à l'intérieur d'une région de recirculation comportant la région d'extrémité de la conduite de transport (20), la tête distributrice (22), les voies de recirculation (76) et les conduites de recirculation (38, 38a-381).
